# FASCICULE DE BREVET EUROPEEN

(11) **EP 2 304 523 B1**
(45) Date de publication et mention de la délivrance du brevet: **25.04.2018**
(21) Numéro de dépôt: 09800051.6
(22) Date de dépôt: 21.07.2009
(51) Int. Cl.: G06F 3/01, G06F 3/033, G06F 3/0362

(54) **DISPOSITIF DE COMMANDE À RETOUR HAPTIQUE**
VORRICHTUNG ZUR HAPTISCHEN FEEDBACK-STEUERUNG
DEVICE FOR HAPTIC FEEDBACK CONTROL

(30) Priorité: 21.07.2008 FR 0804131
(43) Date de publication de la demande: 06.04.2011
(73) Titulaire: DAV, 94000 Creteil (FR)
(72) Inventeur: DROUIN, Xavier, F-74106 Annemasse (FR); LAURENT, Patrice, F-74106 Annemasse (FR)
(74) Mandataire: Pothmann, Karsten
(86) Numéro de dépôt international: PCT/EP2009/059386
(87) Numéro de publication internationale: WO 2010/010100

(56) Documents cités:
- EP-A- 0 626 634
- WO-A-2008/078753
- US-A1- 2004 178 989
- US-A1- 2005 017 947
- US-A1- 2006 256 075

## Description

La présente invention concerne un dispositif de commande à retour haptique comportant une plaque de support apte à transmettre un retour haptique, tel qu'une vibration, à un utilisateur par exemple après la modification ou la sélection d'une commande.

Les dispositifs de commande comportent une plaque de support reliée à des actionneurs pour transmettre un retour haptique à un doigt d'un utilisateur dans une zone de déplacement du doigt.

Ainsi, lorsqu'un appui d'un doigt est détecté dans la zone de déplacement, les actionneurs font vibrer la plaque en translation (comme par exemple dans US 2006/256075 A1, fig. 7). Dans le cas des dispositifs comportant une zone de déplacement du doigt de forme circulaire (comme par exemple dans US 2004/178989 A1, qui décrit un dispositif à retour haptique comprenant un pavé tactile de forme circulaire et un actionneur agencé pour créer un mouvement de rotation du pavé tactile et fournir ainsi un retour haptique à un utilisateur), il peut arriver que le retour haptique ne soit pas ressenti uniformément sur toute la zone de déplacement du doigt par l'utilisateur.

Le but de la présente invention est donc de proposer un dispositif de commande à retour haptique qui ne présente pas les inconvénients de l'état de la technique.

A cet effet, l'invention a pour objet un dispositif de commande à retour haptique comportant une plaque de support pour transmettre un retour haptique à un doigt d'un utilisateur dans une zone de déplacement dudit doigt de forme circulaire, un capteur à surface tactile pour détecter un appui dudit doigt dans ladite zone, caractérisé en ce qu'il comporte un premier et un deuxième actionneurs reliés à ladite plaque pour appliquer un couple de rotation à ladite plaque pour générer le retour haptique dans ladite zone lorsqu'un appui est détecté, par un mouvement en pivotement de ladite plaque autour d'un axe de rotation, immatériel et coaxial au centre de ladite zone de déplacement dudit doigt.

Ainsi, le ressenti obtenu est uniforme pour l'utilisateur dans toute la zone de déplacement du doigt et l'axe de rotation ne présente pas d'axe matériel, ce qui permet de limiter le bruit parasite.

Selon une ou plusieurs caractéristiques de l'invention, prise seule ou en combinaison,
- ladite plaque présente une forme circulaire ou annulaire,
- lesdits actionneurs sont disposés de manière diamétralement opposée,
- une des deux liaisons entre ladite plaque et la partie mobile de l'actionneur comporte un jeu de fonctionnement en translation radiale,
- ledit dispositif de commande comporte des moyens de liaisons entre ladite plaque et la partie mobile des actionneurs réalisés en matière plastique ; la compliance de la matière plastique suffit pour absorber les déformations des liaisons entre la plaque et les supports des actionneurs respectifs et permet la limitation des bruits parasites lors du pivotement de la plaque,
- ledit dispositif de commande comporte une unité de traitement reliée audit capteur et configurée pour déterminer le sens d'un déplacement élémentaire dudit doigt à partir des signaux issus dudit capteur, et pour moduler au moins un paramètre de commande d'au moins un actionneur, de manière que la résultante de l'effet vibratoire généré par ledit actionneur soit ressentie par ledit doigt selon une même direction et sensiblement à contresens de la direction dudit déplacement élémentaire,
- ledit paramètre de commande est modulé de manière que l'actionneur se déplace avec une vitesse plus élevée à contresens du déplacement élémentaire que dans le sens du déplacement élémentaire,
- ledit capteur de déplacement comporte un capteur à surface tactile porté par la plaque de support dans la zone de déplacement dudit doigt,
- ledit dispositif de commande comporte un capteur de pression à surface tactile, tel qu'un capteur de pression à surface tactile de type FSR.

D'autres avantages et caractéristiques apparaîtront à la lecture de la description de l'invention, ainsi que des dessins annexés sur lesquels :
- la figure 1 est une vue schématique d'un dispositif de commande réalisé selon un premier mode de réalisation,
- la figure 2 est une vue schématique d'un dispositif de commande réalisé selon un deuxième mode de réalisation,
- les figures 3a, 3b et 3c sont des vues d'un dispositif de commande en fonctionnement correspondant au mode de réalisation de la figure 2 et,
- les figures 4 et 5 sont des graphiques représentant deux exemples de déplacements d'un actionneur en fonction du temps.

Sur ces figures, les éléments identiques portent les mêmes numéros de référence.

L'invention concerne un dispositif de commande à retour haptique, par exemple pour un tableau de commande de véhicule automobile, pour une dalle tactile ou encore pour un écran tactile, pouvant transmettre un retour haptique à un utilisateur ayant par exemple modifié ou sélectionné une commande.

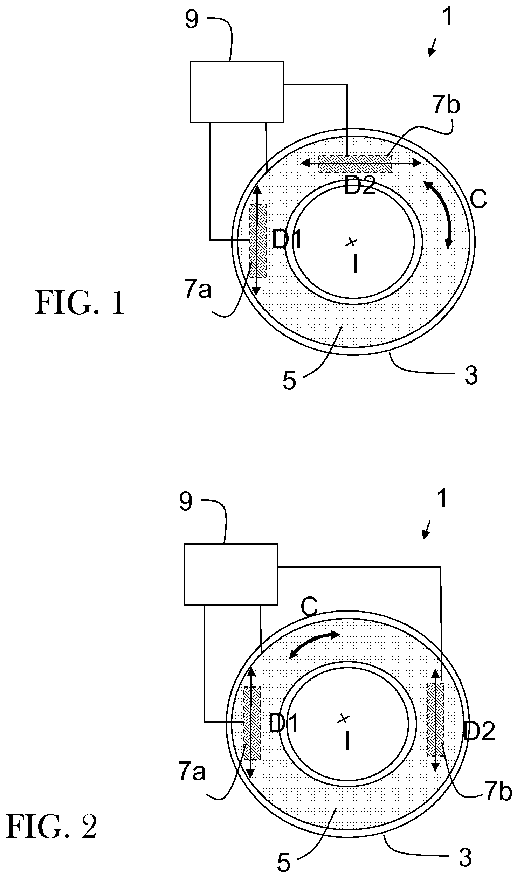

Comme représenté sur la figure 1, le dispositif 1 comporte une plaque de support 3 pour transmettre un retour haptique à un doigt d'un utilisateur dans une zone de déplacement du doigt de forme circulaire, un capteur à surface tactile 5 pour détecter un appui du doigt dans la zone et un premier et un deuxième actionneurs 7a, 7b reliés à la plaque 3 pour générer le retour haptique dans la zone lorsqu'un appui est détecté.

Le retour haptique est par exemple une vibration produite par un signal de commande sinusoïdal ou par un signal de commande comportant un ou une succession de pulses.

Les actionneurs 7a, 7b comportent par exemple une partie fixe et une partie mobile en translation dans un entrefer de la partie fixe, par exemple de l'ordre de 200µm, entre une première et une deuxième position (non représenté).

La partie mobile est par exemple un aimant mobile coulissant à l'intérieur d'une bobine fixe ou une bobine mobile coulissant autour d'un aimant fixe, la partie mobile et la partie fixe coopérant par effet électromagnétique.

La partie mobile est reliée à la plaque 3 de manière que le mouvement de la partie mobile engendre le mouvement de la plaque 3 pour générer le retour haptique au doigt de l'utilisateur par les déplacements D de l'actionneur dans la zone de déplacement.

La plaque 3 présente une forme circulaire ou annulaire dans laquelle s'inscrit la zone de déplacement circulaire du doigt de manière à ajuster les dimensions de la plaque 3 aux dimensions de la zone de déplacement du doigt et ainsi limiter l'encombrement du dispositif.

Le capteur de déplacement 5 comporte un capteur à surface tactile porté par la plaque de support 3 dans la zone de déplacement du doigt. On prévoit un capteur de pression à surface tactile, tel qu'un capteur de pression à surface tactile de technologie FSR pour « Force Sensing Résistor » en anglais, c'est-à-dire utilisant des résistances sensibles à la pression.

Ces capteurs comprennent des couches semi-conductrices souples prises en sandwich entre par exemple une couche conductrice et une couche résistive. En exerçant une pression ou un glissé sur la couche FSR, sa résistance ohmique diminue permettant ainsi, par application d'une tension électrique adaptée, de mesurer la pression appliquée et / ou la localisation de l'endroit où la pression est exercée.

Selon une conception différente de la technologie FSR, le capteur tactile comprend deux feuilles souples de support espacées l'une de l'autre par des entretoises élastiques et portant sur des faces mutuellement en regard des éléments permettant de réaliser un contact électrique lors de la compression du capteur.

Les actionneurs 7a, 7b sont configurés pour appliquer un couple de rotation C à la plaque 3 pour générer le retour haptique dans la zone lorsqu'un appui est détecté, par un mouvement en pivotement de la plaque 3 autour d'un axe de rotation I, coaxial au centre de la zone de déplacement dudit doigt.

Dans ce cas, l'axe de rotation I ne présente pas d'axe matériel ce qui permet de limiter le bruit parasite.

Selon un premier mode de réalisation représenté sur la figure 1, les actionneurs 7a, 7b sont disposés de manière à entraîner la plaque 3 en translation selon des directions D1, D2 perpendiculaires et selon un sens adapté pour appliquer un couple de rotation C à la plaque 3.

Selon un deuxième mode de réalisation représenté sur la figure 2, les actionneurs 7a, 7b sont disposés de manière diamétralement opposée de manière à appliquer un couple de rotation C à la plaque 3.

Dans les deux modes de réalisation, l'axe I est formé au centre de la plaque 3. Le ressenti obtenu est alors uniforme pour l'utilisateur dans toute la zone de déplacement du doigt.

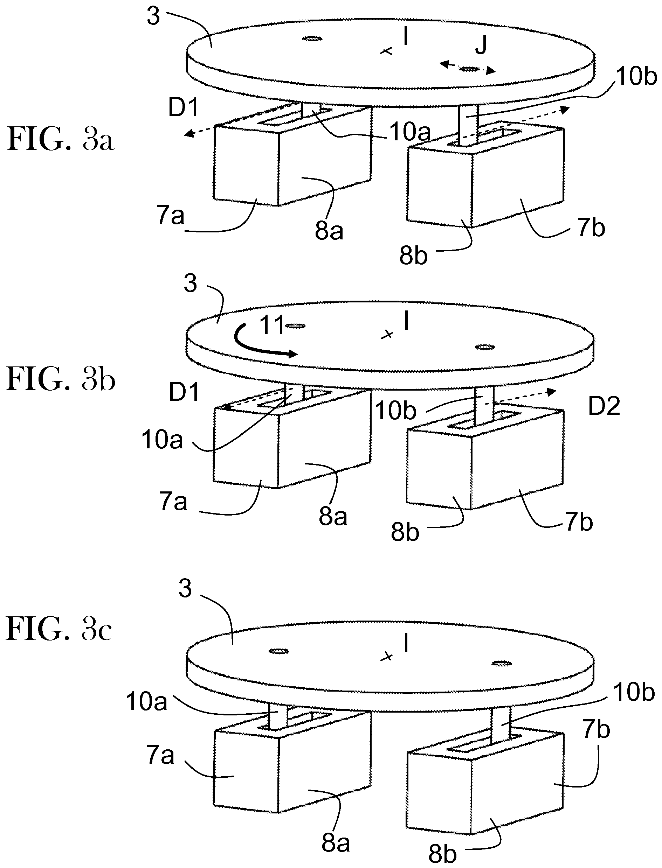

Les figures 3a, 3b et 3c illustrent un dispositif de commande 1 en fonctionnement correspondant au mode de réalisation de la figure 2.

On prévoit qu'une des deux liaisons entre la plaque 3 et la partie mobile de l'actionneur 7b, comporte un jeu de fonctionnement J en translation radiale de manière à ne pas bloquer le pivotement de la plaque 3.

Par exemple, la partie mobile de chaque actionneur 7a, 7b comporte un support 10a, 10b, présentant par exemple la forme d'une tige, reliée à la plaque 3. On prévoit un jeu de fonctionnement J en translation radiale entre un support 10b et la plaque 3.

Alternativement, on prévoit que le dispositif 1 comporte des moyens de liaisons entre la plaque 3 et la partie mobile des actionneurs 7a, 7b réalisés en matière plastique.

Par exemple, on prévoit des supports 10a, 10b en matière plastique. La compliance de la matière plastique suffit pour absorber les déformations des liaisons entre la plaque 3 et les supports 10a, 10b des actionneurs respectifs 7a, 7b. Cette réalisation permet la limitation des bruits parasites lors du pivotement de la plaque 3.

En fonctionnement, la plaque 3 pivote autour de l'axe de rotation I entre une première (figure 3a) et une deuxième position (figure 3c). La figure 3b est une représentation intermédiaire.

Sur la figure 3a, les parties mobiles des actionneurs 7a, 7b sont en butée dans les parties fixes 8a, 8b.

Puis, sur la figure 3b, la partie mobile du premier actionneur 7a se déplace en translation selon une direction D1 et la partie mobile du deuxième actionneur 7b se déplace en translation selon une direction D2, parallèle à la direction D1, en sens opposé, de manière à générer un couple de rotation à la plaque 3.

Ensuite, sur la figure 3c, les parties mobiles des actionneurs 7a sont en butée dans les parties fixes 8a, 8b en deuxième position.

Les signaux de commande sont périodiques. On peut aussi envisager des signaux de commande de type pulse ou ayant des fréquences variables au cours du temps.

Selon une première variante, les paramètres des signaux de commande sont modulés de manière que les actionneurs 7a, 7b se déplacent avec la même vitesse dans le sens horaire que dans le sens antihoraire.

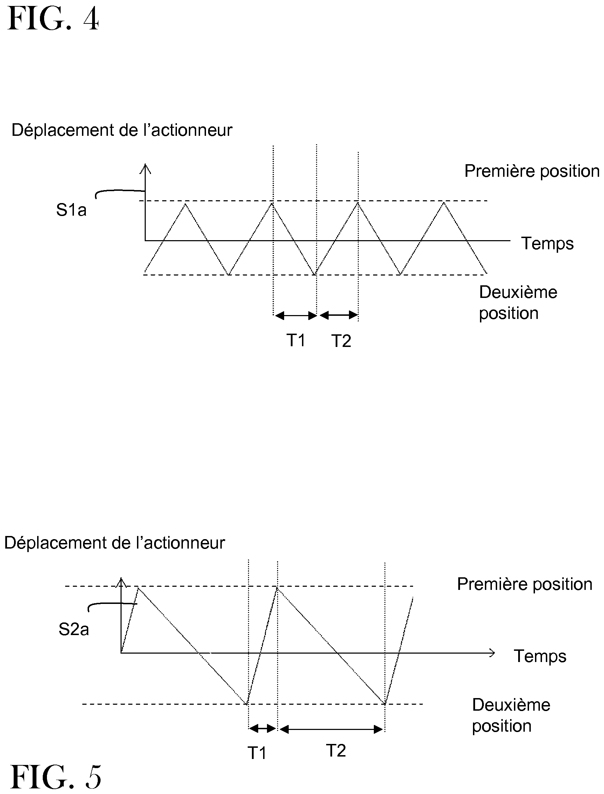

On a représenté sur la figure 4 un graphique du déplacement S1a d'un actionneur en fonction du temps entre une première position et une deuxième position.

L'actionneur se déplace sur la première demi-période T1 de la première à la deuxième position à la même vitesse que la deuxième demi-période T2 de la deuxième à la première position.

On choisit de préférence des périodes T1 et T2 correspondant aux fréquences de résonnance du dispositif 1.

Selon une deuxième variante de réalisation, le dispositif de commande 1 comporte une unité de traitement 9 reliée au capteur 5.

L'unité 9 est configurée pour déterminer le sens d'un déplacement élémentaire du doigt à partir des signaux issus du capteur 5, et pour moduler au moins un paramètre de commande d'au moins un actionneur, de manière que la résultante de l'effet vibratoire généré par l'actionneur soit ressentie par le doigt selon une même direction et sensiblement à contresens de la direction du déplacement élémentaire.

Le sens du déplacement élémentaire est par exemple déduit de deux informations successives de signaux de positions issus du capteur de déplacement 5.

En appliquant ainsi des signaux de commande spécifiques à l'actionneur, on génère un retour haptique à contresens qui est mieux perçu par l'utilisateur.

Par exemple, les paramètres des signaux de commande sont modulés de manière que l'actionneur déplace avec une vitesse plus élevée à contresens du déplacement élémentaire que dans le sens du déplacement élémentaire.

La figure 5 représente un exemple de graphique du déplacement S2a d'un actionneur en fonction du temps entre une première position et une deuxième position.

Sur une période du déplacement de va-et-vient de l'actionneur entre ces deux positions, l'actionneur se déplace sur la première demi-période T1 de la deuxième position vers la première position beaucoup plus rapidement et se déplace plus lentement sur la deuxième demi-période T2 de la première position vers la deuxième position.

Le déplacement plus rapide de l'actionneur est mieux ressenti par l'utilisateur qu'un déplacement plus lent. Ainsi, la résultante de l'effet vibratoire généré par l'actionneur est mieux ressentie par l'utilisateur de la deuxième position vers la première position, à contresens du déplacement du doigt.

On peut ainsi simuler une molette mécanique par une surface plane générant un retour haptique pour par exemple informer un utilisateur d'un changement de commande ou de la sélection d'une commande dans un menu déroulant, par exemple pour informer l'utilisateur d'un changement de la température par un retour haptique tactile.

On comprend qu'en générant un retour haptique par un mouvement en pivotement de la plaque 3 autour d'un axe de rotation I, l'utilisateur perçoit un retour haptique uniformément dans toute la zone de déplacement du doigt.

## Revendications

1. Dispositif de commande à retour haptique comportant une plaque de support (3) pour transmettre un retour haptique à un doigt d'un utilisateur dans une zone de déplacement dudit doigt de forme circulaire, un capteur à surface tactile (5) pour détecter un appui dudit doigt dans ladite zone, **caractérisé en ce qu'**il comporte un premier et un deuxième actionneurs (7a, 7b) reliés à ladite plaque (3) pour appliquer un couple de rotation (C) à ladite plaque (3) pour générer le retour haptique dans ladite zone lorsqu'un appui est détecté, par un mouvement en pivotement de ladite plaque (3) autour d'un axe de rotation (I), immatériel et coaxial au centre de ladite zone de déplacement dudit doigt.

2. Dispositif de commande selon la revendication 1, **caractérisé en ce que** ladite plaque (3) présente une forme circulaire ou annulaire.

3. Dispositif de commande selon la revendication 2, **caractérisé en ce que** lesdits actionneurs (7a, 7b) sont disposés de manière diamétralement opposée.

4. Dispositif de commande selon la revendication 3, **caractérisé en ce qu'**une des deux liaisons entre ladite plaque (3) et la partie mobile de l'actionneur (7b) comporte un jeu de fonctionnement en translation radiale.

5. Dispositif de commande selon la revendication 3, **caractérisé en ce qu'**il comporte des moyens de liaisons entre ladite plaque (3) et la partie mobile des actionneurs (7a, 7b) réalisés en matière plastique.

6. Dispositif de commande selon l'une quelconque des revendications précédentes, **caractérisé en ce qu'**il comporte une unité de traitement (9) reliée audit capteur (5) et configurée pour déterminer le sens d'un déplacement élémentaire (dU) dudit doigt à partir des signaux issus dudit capteur (5), et pour moduler au moins un paramètre de commande d'au moins un actionneur (7), de manière que la résultante de l'effet vibratoire généré par ledit actionneur (7) soit ressentie par ledit doigt selon une même direction et sensiblement à contresens de la direction dudit déplacement élémentaire (dU).

7. Dispositif de commande selon la revendication 6, **caractérisé en ce que** ledit paramètre de commande est modulé de manière que l'actionneur (7) se déplace avec une vitesse plus élevée à contresens du déplacement élémentaire que dans le sens du déplacement élémentaire.

8. Dispositif de commande selon l'une quelconque des revendications précédentes, **caractérisé en ce que** le capteur de déplacement (5) comporte un capteur à surface tactile porté par la plaque de support (3) dans la zone de déplacement dudit doigt.

9. Dispositif de commande selon la revendication 8, **caractérisé en ce qu'**il comporte un capteur de pression à surface tactile, tel qu'un capteur de pression à surface tactile de type FSR, c'est-à-dire «Force Sensing Resistor».

## Patentansprüche

1. Vorrichtung zur haptischen Feedbacksteuerung, umfassend eine Trägerplatte (3), um ein haptisches Feedback an einen Finger eines Benutzers in einem kreisförmigen Bewegungsbereich des Fingers zu übertragen, einen Sensor mit berührungsempfindlicher Oberfläche (5), um ein Abstützen des Fingers in dem Bereich zu erkennen, **dadurch gekennzeichnet, dass** sie einen ersten und einen zweiten Aktuator (7a, 7b) aufweist, die mit der Platte (3) verbunden sind, um ein Drehmoment (C) auf die Platte (3) aufzubringen, um, wenn ein Abstützen erkannt ist, das haptische Feedback in dem Bereich durch eine Schwenkbewegung der Platte (3) um eine Drehachse (I), die immateriell und koaxial zu der Mitte des Bewegungsbereichs des Fingers ist, zu erzeugen.

2. Vorrichtung zur Steuerung nach Anspruch 1, **dadurch gekennzeichnet, dass** die Platte (3) eine kreis-oder ringförmige Form aufweist.

3. Vorrichtung zur Steuerung nach Anspruch 2, **dadurch gekennzeichnet, dass** die Aktuatoren (7a, 7b) diametral gegenüberliegend angeordnet sind.

4. Vorrichtung zur Steuerung nach Anspruch 3, **dadurch gekennzeichnet, dass** eine der beiden Verbindungen zwischen der Platte (3) und dem beweglichen Teil des Aktuators (7b) ein radial verschiebbares Betriebsspiel aufweist.

5. Vorrichtung zur Steuerung nach Anspruch 3, **dadurch gekennzeichnet, dass** sie Verbindungsmittel zwischen der Platte (3) und dem beweglichen Teil der Aktuatoren (7a, 7b), die aus Kunststoff hergestellt sind, aufweist.

6. Vorrichtung zur Steuerung nach einem der vorhergehenden Ansprüche, **dadurch gekennzeichnet, dass** sie eine Verarbeitungseinheit (9) aufweist, die mit dem Sensor (5) verbunden ist und konfiguriert ist, um die Richtung einer grundlegenden Bewegung (dU) des Fingers ausgehend von den Signalen, die von dem Sensor (5) abgegeben sind, zu bestimmen und um mindestens einen Steuerparameter mindestens eines Aktuators (7) derart zu modulieren, dass die Resultierende des Vibrationseffekts, der von dem Aktuator (7) erzeugt wird, von dem Finger in einer gleichen Richtung und im Wesentlichen gegen die Richtung der grundlegenden Bewegung (dU) gespürt wird.

7. Vorrichtung zur Steuerung nach Anspruch 6, **dadurch gekennzeichnet, dass** der Steuerparameter derart moduliert wird, dass sich der Aktuator (7) mit einer höheren Geschwindigkeit gegen die grundlegende Bewegung als in die Richtung der grundlegenden Bewegung bewegt.

8. Vorrichtung zur Steuerung nach einem der vorhergehenden Ansprüche, **dadurch gekennzeichnet, dass** der Bewegungssensor (5) einen Sensor mit berührungsempfindlicher Oberfläche aufweist, der von der Trägerplatte (3) in dem Bewegungsbereich des Fingers getragen ist.

9. Vorrichtung zur Steuerung nach Anspruch 8, **dadurch gekennzeichnet, dass** sie einen Drucksensor mit berührungsempfindlicher Oberfläche, wie einen Drucksensor mit berührungsempfindlicher Oberfläche des Typs des FSR, das heißt "Force Sensing Resistor", aufweist.

## Claims

1. Device for haptic feedback control comprising a backing plate (3) for transmitting a haptic feedback to a finger of a user in a circular-shaped zone of movement of said finger, a touch-sensitive surface sensor (5) for detecting a pressure of said finger in said zone, **characterized in that** it comprises a first and a second actuator (7a, 7b) connected to said plate (3) in order to apply a rotary torque (C) to said plate (3) in order to generate the haptic feedback in said zone when a pressure is detected, by a pivoting movement of said plate (3) about a geometric axis of rotation (I), coaxial with the center of said zone of movement of said finger.

2. Control device according to Claim 1, **characterized in that** said plate (3) has a circular or annular shape.

3. Control device according to Claim 2, **characterized in that** said actuators (7a, 7b) are placed in a diametrically opposed manner.

4. Control device according to Claim 3, **characterized in that** one of the two connections between said plate (3) and the movable portion of the actuator (7b) comprises an operating clearance in radial translation.

5. Control device according to Claim 3, **characterized in that** it comprises means for connection between said plate (3) and the movable portion of the actuators (7a, 7b) made of plastic material.

6. Control device according to any one of the preceding claims, **characterized in that** it comprises a processing unit (9) connected to said sensor (5) and configured to determine the direction of an elementary movement (dU) of said finger based on the signals originating from said sensor (5), and for modulating at least one control parameter of at least one actuator (7), so that the resultant of the vibratory effect generated by said actuator (7) is felt by said finger in one and the same direction and substantially in the opposite direction to the direction of said elementary movement (dU).

7. Control device according to Claim 6, **characterized in that** said control parameter is modulated so that the actuator (7) moves at a higher speed in the opposite direction to the elementary movement than in the direction of the elementary movement.

8. Control device according to any one of the preceding claims, **characterized in that** the movement sensor (5) comprises a touch-sensitive surface sensor supported by the backing plate (3) in the zone of movement of said finger.

9. Control device according to Claim 8, **characterized in that** it comprises a touch-sensitive surface pressure sensor such as a touch-sensitive surface pressure sensor of the FSR (Force Sensing Resistor) type.
